(19) Europäisches Patentamt
European Patent Office
Office européen des brevets

(11) **EP 1 744 250 A1**

(12) **EUROPEAN PATENT APPLICATION**
published in accordance with Art. 158(3) EPC

(43) Date of publication:
**17.01.2007 Bulletin 2007/03**

(51) Int Cl.:
***G06F 13/10*** *(2006.01)*     ***G06F 12/14*** *(2006.01)*
***G06K 17/00*** *(2006.01)*     ***G06K 19/00*** *(2006.01)*

(21) Application number: **05730380.2**

(22) Date of filing: **18.04.2005**

(86) International application number:
**PCT/JP2005/007380**

(87) International publication number:
**WO 2005/103917 (03.11.2005 Gazette 2005/44)**

(84) Designated Contracting States:
**DE FR GB NL**

(30) Priority: **23.04.2004 JP 2004128541**

(71) Applicant: **SONY CORPORATION**
**Tokyo 141-0001 (JP)**

(72) Inventors:
• **OTA, Toyokazu,**
**c/o SONY CORPORATION**
**Tokyo 1410001 (JP)**

• **KURITA, Taro,**
**c/o SONY CORPORATION**
**Tokyo 1410001 (JP)**
• **TAKEMURA, Toshiharu,**
**c/o SONY CORPORATION**
**Tokyo 1410001 (JP)**

(74) Representative: **Körber, Martin Hans**
**Mitscherlich & Partner**
**Patentanwälte**
**Sonnenstrasse 33**
**80331 München (DE)**

(54) **DATA COMMUNICATION SYSTEM, DATA COMMUNICATION METHOD, AND DATA COMMUNICATION APPARATUS**

(57)     Data are transferred between data communication apparatuses having contactless interfaces, while they can be prevented from being overlapped between the data transfer source and the data transfer destination. In response to a data transfer instruction from the data transfer source apparatus, the data transfer destination apparatus holds the data in a provisional creation state. Then, the data transfer source apparatus, when receiving a transfer instruction response from the data transfer destination apparatus, places its held data into an invalid state. Then, in response to a transfer acknowledgement instruction from the data transfer source apparatus, the data transfer destination apparatus validates the data in provisional creation state. Then, in response to a transfer acknowledgement response from the data transfer destination apparatus, the data transfer source apparatus deletes the data in the invalid state.

FIG.6

EP 1 744 250 A1

## Description

TECHNICAL FIELD

The present invention relates to a data communication system, a data communication method and a data communication apparatus that are adapted to effect data communication between data communication apparatuses provided with relatively large capacity memory areas, particularly, to a data communication system, a data communication method and a data communication apparatus that are adapted to effect data communication between data communication apparatuses adapted to transmit encrypted data through contactless interfaces.

In more detail, the present invention relates to a data communication system, a data communication method and a data communication apparatus that are adapted to transfer value information such as electronic money and an electronic ticket between data communication apparatuses having contactless interfaces, particularly, a data communication system, a data communication method and a data communication apparatus that are adapted to transfer data between data communication apparatuses having contactless interfaces, while preventing the data from being duplicated in a data transfer source and a data transfer destination.

BACKGROUND ART

A contactless or proximity communication system typically available in the form of an IC card is widespread by reason of its operational easiness. For instance, pre-storing of password codes and other personal authentication information and/or value information such as an electronic ticket in the IC card is adaptable to provide processing for authentication of visitors or passengers in places such as cash dispensers, concert hall gateways and ticket wickets at a station.

Radio communication of this type is generally realized on the basis of a principle of electromagnetic induction. That is, a system is configured with an IC card having a memory function and a card reader/writer performing read/write access to a memory of the IC card is required, and an IC card-side loop coil serving as a primary coil and a card reader/writer-side antenna serving as a secondary coil form a transformer unit as a system. Then, an electromagnetic induction action is adapted to transmit power and information similarly from the card reader/writer side to the IC card, causing the IC card side to be driven with the fed power for giving an answer to a question signal from the card reader/writer side. Thus, it is not necessary for the IC card itself to have a drive power supply such as a battery.

A general way to make use of the IC card is putting the IC card over the card reader/writer by a user. The card reader/writer side keeps up polling to the IC card at all times, so that if an external IC card is detected, communication operation between the IC card and the card reader/writer is started (See a non-patent document 1, for instance).

In recent years, in cooperation also with an improvement on a micro-fabrication technology, an IC card having a relatively large capacity memory comes into existence. According to an IC card with a large capacity memory, it is possible to expand a file system on a memory space and to store more than one application simultaneously, permitting a single IC card to be used for more than one purpose. For instance, storing of more than one application, such as the electronic money for electronic payment and the electronic ticket for admission to a specific concert hall, on a single IC card makes it possible to apply the single IC card for various purposes. Terms of the electronic money and the electronic ticket specified herein are referred to a mechanism required for settlement of accounts (or the electronic payment) through electronic data issued depending on a fund provided by a user or to the above electronic data itself.

The general way to make use of the IC card is putting the IC card over the card reader/writer by the user. The card reader/writer side keeps up the polling to the IC card at all times, so that if an external IC card is detected, communication operation between the IC card and the card reader/writer is started.

At this time, personal identification or authentication processing between the IC card and the IC card reader/writer is performed by matching a secret number input to an IC card reader side by a user with a secret number stored on the IC card. (The secret number used at the time of IC card access is particularly referred to as a PIN (Personal Identification Number)). Then, when the personal identification or authentication processing results in success, the user is allowed to use the application contained in the IC card, that is, to access to a service memory area assigned to the application (the memory area assigned to the application is referred to as "the service memory area"). The access to the service memory area requires suitably encrypted communication depending on an application security level.

Further, the IC card or the card reader/writer (or a card read/write apparatus) permits a wired interface (not shown) for connection to an external apparatus to be included, in addition to the radio or contactless interface, leading to mounting of IC card and reader/writer functions or one or both of the IC card and card reader/writer functions to each device of a mobile phone, a PDA (Personal Digital Assistance), a CE (Consumer Electronics) apparatus and a personal computer etc. In such a case, it is possible to make use of an IC card technology as a versatile two-way proximity communication interface.

For instance, when apparatuses themselves such as computers and information household electronic apparatuses are combined to form the proximity communication system, the contactless communication involving use of the IC card is effected in the form of one-to-one communication. Alternatively, it is also allowable for a certain apparatus to communicate also with a mating device other than the apparatus such as the contactless IC card, in which case, one application adapted to effect one-to-multiple communication in one apparatus and a plurality of cards is also supposed to be available.

Further, running of various types of applications involving use of the IC card, such as an exchange of electronic value information with the outside as well as the electronic payment, is attainable on an information processing terminal. For instance, use of a user interface such as a keyboard and a display on the information processing terminal permits user interaction with the IC card to be effected on the information processing terminal. Further, connection between the IC card and the mobile phone permits stored contents in the IC card to be exchanged over a telephone network. Furthermore, establishment of connection from the mobile phone to the Internet is adaptable to pay a charge for service with the IC card.

As described the above, a useful service based on the contactless or proximity communication is realizable as a substitute for a conventional prepaid card or a service card available on a shop-by-shop basis by assigning a file system for a certain service source provider to a built-in memory of an IC card, before managing, within the assigned file system, information (such as user identification or authentication information, remaining value information and a history (or a log) of service used) for service operations by the concerned provider.

Conventionally, the IC card has been issued individually on a service source provider-by-service source provider basis, providing the service for the user. Thus, the user has been required to carry with an assortment of IC cards for each desired service. To the contrary, according to an IC card having a relatively large capacity memory space, it is effective in making sure of a sufficient capacity as much as that adaptable to record information relating to more than one service in a built-in memory of a single IC card.

Referring now to a prepaid-type voucher such as a prepaid card, there is an enactment of "a law relating to prepaid card-type voucher regulations etc." (which goes by the name of "a prepaid card law") for imposing required regulations for registrations and others upon prepaid-type voucher issuers mainly with the object of securing appropriate administrations for services such as issuance of the prepaid-type vouchers so as to protect the profits of those including prepaid-type voucher purchasers and also to keep up the credit with respect to the prepaid-type vouchers, wherein there exists obligations to give a description of prescribed matters such as a logo and a reference to a prepaid card surface (or a voucher surface) for the sake of convenience of the user and/or keeping of a distribution order etc. (See Section 12 of the above law).

When the prepaid card is materialized by storing prepayment information in an IC card memory function, required information regulated by the law needs to be printed on a medium, resulting in a limitation of an available service to a single service. To the contrary, when the IC card function is put into use on a display function-mounted mobile terminal like the mobile phone, displaying of information relating to desired value information on the display (See a patent document 1, for instance) is adaptable to meet the regulations in the above law, permitting sharing by more than one service source provider to be attained. Thus, the service source provider gets relief from a burden on the card issuance, while the user may bring a reduction in number of IC cards to be carried under management to realization.

[Patent document 1]
Japanese Patent Application Publication (KOKAI) 2003-141434
[Non-patent document 1]
"RFID handbook, Principles and Applications of Contactless IC Card" by Klaus Finkenzeller (Nikkan Kogyou Shimbun Ltd., ISBN 4-526-0470105)

[Disclosure of the Invention]

Problems Solved by the Invention

As described the above, various types of value information such as the electronic money and the electronic ticket may be stored on an IC card or an IC chip in security.

An increasing progressive spread of the IC card in the future is supposed to bring about a situation in which each user is required to possess two or more IC cards (or IC chip-mounted apparatuses). With considerations of convenience for the user, such an IC card service environment gives rise to the need for transfer of data contained in the IC card.

The transfer of data specified herein includes not only IC card-to-IC card transfer but also transfer of data from the IC card to the IC chip-mounted apparatus (such as the mobile phone and other types of mobile apparatuses) and transfer of data from one IC chip-mounted apparatus to the other. For the sake of convenience, the IC card and the IC chip-mounted apparatus are hereinafter altogether referred to as the IC card.

The data serving herein as the transfer target is available in the form of value information such as the electronic money and the electronic ticket. This is just as the user is required to transfer contents in purses properly used for each purpose or to make integration into one purse.

In a case of transferring cash, the transfer from one purse to the other is involved, whereas no additional cash is gained. To the contrary, while the value information such as the electronic money and the electronic ticket is valuable as much as the cash, its entity is given in the form of digital data, so that at the time of the data transfer, one possibility may exist that original value information will be present in an overlapped state in both of a data transfer source IC card and a data transfer destination IC card. If the situation as described above occurs, the value information provider is obliged to provide a service beyond one's actually issued service or an overlapped service, resulting in detriment to one's interests.

A communication path adapted to establish the connection between the IC cards with the contactless interfaces is available in the form of an encrypted transmission path of safety, resulting in no danger of causing the data to be overlapped by a leakage to the outside in the process of the data transfer. On the other hand, an inter IC-card connection state is maintained with both the IC cards spaced at a relatively short distance serving as a communication range in the contactless interfaces, so that one possibility may exists that the data will be overlapped when some unexpected accidents cause the IC cards to be pulled apart, leading to a cut of the connection, or when the contactless communication results in no normal termination by other causes.

The present invention has been undertaken in view of the above technical problems and is mainly intended to provide a data communication system, a data communication method and a data communication apparatus that are excellent and adaptable to effect data communication between data communication apparatuses adapted to transmit encrypted data through contactless interfaces.

The present invention is further intended to provide a data communication system, a data communication method and a data communication apparatus that are excellent and adaptable to suitably transfer value information such as electronic money and an electronic ticket between data communication apparatuses having contactless interfaces.

The present invention is still further intended to provide a data communication system, a data communication method and a data communication apparatus that are excellent and adaptable to transfer data between data communication apparatuses having contactless interfaces while preventing the data from being overlapped between a data transfer source and a data transfer destination.

[Means for Solving the Problems]

The present invention is provided in considerations of the above problems and relates to a data communication system that is adapted to transfer data between data communication apparatuses each having a memory adapted to store the data, and comprises communication means which transfers data contained in the memory of a first data communication apparatus serving as a data transfer source to the memory of a second data communication apparatus serving as a data transfer destination, state setting means which sets, in a stage in the course of data transfer processing with the communication means, states in the memory of each of the first and the second data communication apparatuses respectively in relation to a data entity serving as a transfer target, and memory access control means which brings into unauthorized, access to the data entity in the memory of at least one data communication apparatus when setting of a state representing a presence of the data entity serving as the transfer target in the memory of each of the first and the second data communication apparatuses is given.

Provided that "the system" specified herein is referred to as a logically aggregate of more than one apparatus (or one functional module for implementing a specific function), and it does not matter whether or not each apparatus or functional module is contained in a single casing.

The data communication system according to the present invention is of a type of data communication system adapted to transfer encrypted data through the contactless interface used in the IC card, for instance.

As described above, the IC card (or the IC chip-mounted apparatus) is used as the place of safety to store the value information such as the electronic money and the electronic ticket or highly realizable digital data that is valuable as much as the cash.

Now, with considerations of the convenience for the user, it is necessary to transfer the data contained in the IC card, in which case, however, as one adverse effect of an abnormal termination of the data transfer, there is a possibility of causing the data to be overlapped such that the data will remain in both of the data transfer source and the data transfer destination. In this case, the value information provider is obliged to provide the service beyond one's actually issued service, or the overlapped service, resulting in the detriment to one's interests.

To the contrary, according to the present invention, in the stage in the course of the data transfer processing, the access to the data entity in the memory of at least one data communication apparatus is required to be placed into an unauthorized state in the presence of the data entity serving as the transfer target in both of the first data communication apparatus serving as the data transfer source and the second data communication apparatus serving as the data transfer destination.

Thus, even in the presence of the data in both of the data communication apparatuses serving as the data transfer source and the data transfer destination, the data may be substantially prevented from being overlapped.

In the present invention requires, each data communication apparatus serving as the data transfer source or the data transfer destination effects management of the data respectively held in its memory after placing a data field adapted to hold the data into one of states including a valid state in which the access to the data contained in the data field is authorized, a state in which provisional creation of the data contained in the data field is in process, a state in which the data contained in the data field is invalid, and a state in which deletion of the data from the data field is done. Then, the data field in each of the provisional creation and the invalid states results in the presence of the data entity serving as the transfer target in the memory of each of the data communication apparatuses serving as the data transfer source and the data transfer destination, so that the data is prevented from being overlapped by prohibiting the access to the concerned data entity in the memory of at least one data communication apparatus.

In response to a data transfer instruction from the data communication apparatus serving as the data transfer source, the data communication apparatus serving as the data transfer destination holds, in its memory, the data entity serving as the transfer target in the provisional creation state.

Then, the data communication apparatus serving as the data transfer source, when receiving a transfer instruction response to the data transfer instruction from the data communication apparatus serving as the data transfer destination, places the held data in its memory into the invalid state.

Subsequently, the data communication apparatus serving as the data transfer source transmits a transfer acknowledgement instruction describing that the data serving as the transfer target was placed into the invalid state. Then, in response to the transfer acknowledgement instruction, the data communication apparatus serving as the data transfer destination validates the held data in its memory in the provisional creation state.

Then, the data communication apparatus serving as the data transfer destination gives a transfer acknowledgement response describing that its held data was placed into the valid state. In return for this, the data communication apparatus serving as the data transfer source deletes the data in the invalid state from its memory in response to the transfer acknowledgement response.

[Effects of the Invention]

According to the present invention, there may be provided the data communication system, the data communication method and the data communication apparatus that are excellent and adaptable to effect the data communication between the data communication apparatuses adapted to transmit the encrypted data through the contactless interfaces.

According to the present invention, there may be also provided the data communication system, the data communication method and the data communication apparatus that are excellent and adaptable to suitably transfer the value information such as the electronic money and the electronic ticket between the data communication apparatuses having the contactless interfaces.

According to the present invention, there may be further provided the data communication system, the data communication method and the data communication apparatus that are excellent and adaptable to transfer the data between the data communication apparatuses having the contactless interfaces while preventing the data from being overlapped between the data transfer source and the data transfer destination.

The above and other objects, features and advantages of the present invention will become more apparent from the following detailed description of the presently preferred exemplary embodiment of the invention taken in conjunction with the accompanying drawing.

[Brief Description of the Drawings]

[FIG. 1] FIG. 1 is a view schematically showing a configuration of a contactless IC card communication system to which the present invention is applicable.
[FIG. 2] FIG. 2 is a view showing one configuration of a card reader/writer 1.
[FIG. 3] FIG. 3 is a view showing one configuration of an IC card 2.
[FIG. 4] FIG. 4 is a view schematically showing a control system configuration of a memory area in the IC card according to the present invention.
[FIG. 5] FIG. 5 is a view schematically showing an intra-IC card data structure serving as a transfer target in the present invention.
[FIG. 6] FIG. 6 shows a sequence representing an operational procedure adapted to transfer data from one IC card to the other IC card using a contactless interface in the IC card.

[Explanation of reference numerals]

| | |
|---|---|
| 1 | Card reader/writer |
| 2 | IC card |
| 3 | Controller |
| 21 | IC chip module |
| 23 | Modulation circuit |
| 25 | Demodulation circuit |
| 27 | Antenna |
| 51 | IC chip module |
| 52 | Capacitor |
| 53 | Antenna |
| 61 | RF interface unit |
| 62 | BPSK demodulation circuit |
| 63 | PLL unit |
| 64 | Operating unit |
| 65 | ROM |
| 66 | EEPROM |
| 67 | RAM |
| 68 | BPSK modulation circuit |
| 81 | ASK demodulating unit |
| 82 | Voltage regulator |
| 83 | Oscillation circuit |

84    ASK modulating unit
91    Sequencer
92    Encrypting/decrypting unit
93    Parity operating unit

[Best Mode for Carrying out the Invention]

An embodiment of the present invention is now described in detail with reference to the accompanying drawings.

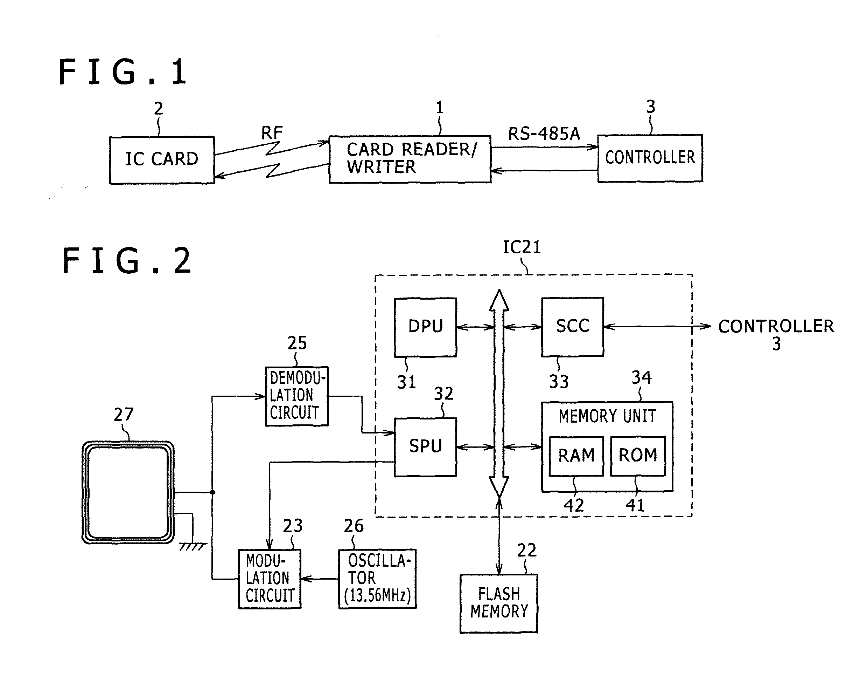

Referring to FIG. 1, there is schematically shown a configuration of a contactless IC card communication system to which the present invention is applicable.

This contactless card system is composed of a card reader/writer 1, an IC card 2, and a controller 3, and permits data to be transmitted and received between the card reader/writer 1 and the IC card 2 in a contactless manner by making use of electromagnetic waves. Specifically, the card reader/writer 1 transmits a prescribed command to the IC card 2, causing the IC card 2 to perform processing corresponding to the received command. Then, the IC card 2 transmits, to the card reader/writer 1, response data corresponding to a result of the above processing.

The card reader/writer 1 is connected to the controller 3 through a prescribed interface (an interface that conforms to RS-485A standards etc., for instance). The controller 3 supplies a control signal to the card reader/writer 1, causing prescribed processing to be put into execution.

Referring to FIG. 2, there is shown one configuration of the card reader/writer 1 shown in FIG. 1.

An IC chip module 21 is configured with a DPU (Data Processing Unit) 31 to effect processing of the data, an SPU (Signal Processing Unit) 32 to effect processing of signals transmitted to and received from the IC card 2, an SCC (Serial Communication Controller) 33 to effect communication with the controller 3, and a memory unit 34 including a ROM unit 41 preliminarily containing information required for data processing, and a RAM unit 42 to temporarily store partially completed work data, and these functional modules are interconnected through a bus. Further, a flash memory 22 to store prescribed data is also connected to the bus.

The DPU 31 outputs, to the SPU 32, a command to be transmitted to the IC card 2, and also receives the response data from the IC card 2 through the SPU 32 to give prescribed data processing.

The SPU 32 gives modulation processing such as BPSK (BiPhase Shift keying) to the command to be transmitted to the IC card 2, before outputting to a modulation circuit 23, and also receives the response data from the IC card 2 through a demodulation circuit 25 to give prescribed demodulation processing such as the BPSK to the received response data.

The modulation circuit 23 ASK (Amplitude Shift Keying)-modulates a supplied carrier wave of a prescribed frequency (or 13.56 MHz, for instance) from an oscillator 26 with the supplied data from the SPU 32, causing a resultant modulated wave to be outputted as the electromagnetic wave to the IC card 2 through an antenna 27. At this time, the modulation circuit 23 is required to set a modulation degree at less than 1 for ASK modulation. In other words, the maximum amplitude of the modulated wave needs to be provided without reaching zero, even when the data is available at a low level.

The demodulation circuit 25 is configured to demodulate the modulated wave (or an ASK-modulated wave) having been received through the antenna 27, causing the demodulated data to be outputted to the SPU 32.

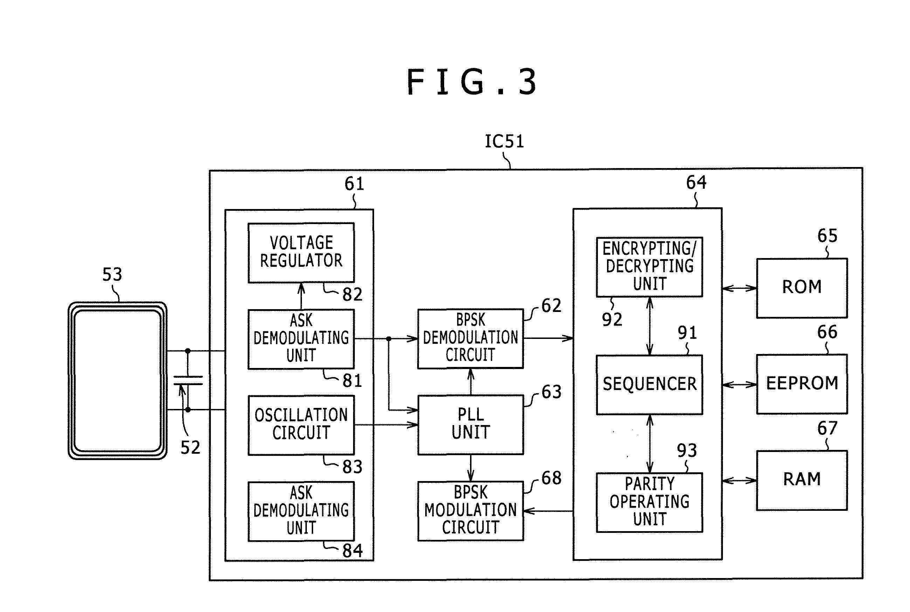

Fig. 3 shows one configuration of the IC card 2 shown in FIG. 1. This IC card is composed of an IC chip module 51 and an antenna 53 on a loop.

The IC chip module 51 receives the modulated wave from the card reader/writer 1 through the antenna 53. It is to be noted that a capacitor 52 is combined with the antenna 53 to form a LC circuit so as to provide tuning (or resonance) to the electromagnetic wave of a prescribed frequency (or a carrier frequency).

The IC chip module 51 is composed of an RF interface unit 61 and an operating unit 64 etc. The RF interface unit 61 is composed of an ASK demodulating unit 81, a voltage regulator 82, an oscillation circuit 83, and an ASK modulating unit 84. The ASK demodulating unit 81 detects and demodulates the modulated wave (or the ASK-modulated wave) having been received through the antenna 53, causing the demodulated data to be outputted to a BPSK demodulation circuit 62 and a PLL (Phase Locked Loop) unit 63. The voltage regulator 82 stabilizes a signal having been detected by the ASK demodulating unit 81, before supplying as DC power to each circuit.

The RF interface unit 61 also permits a signal of the same frequency as a data clock frequency to be oscillated with the oscillation circuit 83, causing the resultant signal to be outputted to the PLL unit 63. Then, the ASK modulating unit 84 ASK-modulates the modulated wave being received through the antenna 53 by fluctuating a load of the antenna 53 serving as a power supply of the IC card 2 (or by on-off controlling a prescribed switching element in correspondence to the data to connect a prescribed load to the antenna 53 in parallel only when the switching element is in an on state) in correspondence to the supplied data from the operating unit 84, causing a modulated component of the modulated wave to be transmitted to the card reader/writer 1 through the antenna 53. Whenever the transmission of the data from the IC card 2 takes place, the card reader/writer 1 provides the fixed maximum amplitude of the modulated wave outputted therefrom, and accordingly, this modulated wave is ASK-modulated depending on a load fluctuation of the antenna 53. Further, with the above transmission of the data, a terminal voltage in the antenna 27 of the card reader/writer 1 fluctuates.

The PLL unit 63 generates, from the supplied data from the ASK demodulating unit 81, a clock signal synchronized with the supplied data, causing the resultant clock signal to be outputted to the BPSK demodulation circuit 62 and the BPSK modulation circuit 68.

In a case where the demodulated data produced by the ASK demodulating unit 81 is in the form of BPSK-modulated data, the BPSK demodulation circuit 62 effects the demodulation of the above modulated data according to the supplied clock signal from the PLL unit 63, causing the demodulated data to be outputted to the operating unit 64.

In a case where the supplied data from the BPSK demodulation circuit 62 is in the form of encrypted data, after decrypting the encrypted data with an encrypting/decrypting unit 92, the operating unit 64 processes the data with a sequencer 91. Conversely, in a case of the data obtained without being encrypted, the supplied data from the BPSK demodulation circuit is directly supplied to the sequencer 91 without passing through the encrypting/decrypting unit 92.

The sequencer 91 performs the processing corresponding to the data serving as the command supplied to the sequencer. For instance, the sequencer 91 is adapted to perform the processing such as write and readout of data with respect to an EEPROM (Electrically Erasable & Programmable ROM) 66.

A parity operation unit 93 of the operating unit 64 calculates a read Solomon code as parity from the data stored in and/or contained in the EEPROM 66. Further, after giving prescribed processing with the sequencer 91, the operating unit 64 outputs, to the BPSK modulation circuit 68, the response data (or the data to be transmitted to the card reader/writer 1) corresponding to the above processing.

The BPSK modulation circuit 68 BPSK-modulates the supplied data from the operating unit 64, causing the modulated data to be outputted to the ASK modulating unit 84 of the RF interface unit 61.

The ROM 65 permanently contains a processing program that the sequencer 91 executes and other required data. The RAM 67 is to temporarily store work data etc. that is used at the time when the sequencer 91 performs the processing.

The EEPROM 66 is a nonvolatile memory, and is used to store, on the IC card 2, a large number of applications such as the electronic money for the electronic payment and the electronic ticket for the admission to a specific concert hall. The IC card 2 itself basically has no drive power supply such as a battery, so that it is necessary to use the non-volatile memory like the EEPROM 66 that may keep hold of the data also in a power off state even after a termination of the communication with the card reader/writer 1 by the IC card 2 brings a feed of power to a stop.

Processing for data transmission and reception between the card reader/writer 1 and the IC card 2 is now described.

The card reader/writer 1 stands ready until a load state change with access of the IC card 2 is detected, while monitoring a load state of the antenna 27 by radiating a prescribed electromagnetic wave through the antenna 27. It is noted that the card reader/writer 1 may be also configured to take some processing (or polling) for repeatedly effecting the polling to the IC card 2 until a response from the IC card 2 is acknowledged within a certain period of time by radiating the ASK-modulated electromagnetic wave produced with data of a relatively short pattern.

If the access of the IC card 2 is detected in the card reader/writer 1, the SPU 32 of the R/W 1 effects the BPSK modulation with the data (such as the command corresponding to the processing to be performed by the IC card 2 and the data to be written on the IC card 2) to be transmitted to the IC card 2 using a rectangular wave of a prescribed frequency (or a frequency twice as large as the data clock frequency) as the carrier wave, causing the resultant modulated wave (or a BPSK-modulated signal) to be outputted to the modulation circuit 23.

It is noted that on the occasion of the BPSK modulation, use of a differential conversion permits the data to be adapted to meet a phase change of the modulated wave. In such a case, even if an inversion of the BPSK-modulated signal occurs, the demodulation into its original data is executable, thereby eliminating any need to take account of a modulated wave polarity at the time of the demodulation.

The modulation circuit 23 ASK-modulates the prescribed carrier wave with the supplied BPSK-modulated signal at the modulation degree (= the maximum amplitude of the data signal/the maximum amplitude of the carrier wave) of less than 1 (0.1, for instance), causing the resultant modulated wave (the ASK-modulated wave) to be transmitted to the IC card 2 through the antenna 27.

It is noted that when no transmission is performed, the modulation circuit 23 generates the modulated wave at one of two levels (high and low levels) of a digital signal or the high level, for instance.

The IC card 2 permits, in an LC circuit composed of the antenna 53 and the capacitor 52, a part of the radiated electromagnetic wave from the card reader/writer 1 through the antenna 27 to be converted into an electric signal, causing the resultant electric signal (or the modulated wave) to be outputted to the RF interface 61 of the IC chip module 51. Then, the ASK demodulating unit 81 of the RF interface 61 effects envelop detection by smoothing the modulated wave through rectification, causing the resultant signal to be supplied to the voltage regulator 82, and also extracts a data signal by suppressing a DC component of the above signal, causing the extracted data signal to be outputted to the BPSK demodulation circuit 62 and the PLL unit 63.

The voltage regulator 82 stabilizes the supplied signal from the ASK demodulating unit 81 to generate the DC power, and supplies the resultant power to each circuit.

It is noted that a terminal voltage $V_0$ of the antenna 53 at this time is expressed as follows, for instance.

$$V_0 = V_{10}(1 + k \times V_s(t))\cos(\omega t)$$

Wherein $V_{10}\cos(\omega t)$ represents the carrier wave, k is the modulation degree, and $V_s(t)$ is data outputted from the SPU 32, respectively.

Further, a low-level value $V_{LR}$ in a voltage V1 obtained after rectification by the ASK demodulating unit 81 is expressed as follows, for instance.

$$V_{LR} = V_{10}(1 + k \times (-1)) - V_f$$

Wherein $V_f$ represents a voltage fall in a diode contained in a rectification circuit adapted to effect smoothing through rectification in the ASK demodulating unit 81, and is generally as much as about 0.7 volts.

The voltage regulator 82, when receiving the signal having been given the smoothing through rectification by the ASK demodulating unit 81, stabilizes the received signal, before supplying as the DC power to each circuit including the operating unit 64. It is noted that the modulation degree k of the modulated wave is less than 1, so that a rectified voltage fluctuation (a difference between the high and the low levels) is small. Thus, in the voltage regulator 82, a generation of the DC power is easily attainable.

For instance, in a case where the modulated wave with the modulation degree k of 5% is received so as to have $V_{10}$ of 3 volts or above, the rectified low-level voltage $V_{LH}$ results in 2.15 (= 3 × (1 - 0.05) - 0.7) volts or above, permitting the voltage regulator 82 to supply an adequate voltage as the power supply to each circuit. In this case, the amplitude $2 \times k \times V_{10}$ (Peak-to-Peak value) of an AC component (or a data component) of the rectified voltage $V_1$ results in 0.3 (= 20.05×3) volts or above, permitting the ASK demodulating unit 81 to demodulate the data at a sufficiently high S/N ratio.

As described above, use of the ASK-modulated wave with the modulation degree k of less than 1 provides the communication ensuring a low error rate (in a state of a high S/N ratio), and also permits the adequate DC voltage as the power supply to be supplied to the IC card 2.

The BPSK demodulation circuit 62, when receiving the data signal (the BPSK-modulated signal) from the ASK demodulating unit 81, demodulates the received data signal according to the supplied clock signal from the PLL unit 63, and outputs the demodulated data to the operating unit 64.

In a case where the supplied data from the BPSK demodulation circuit 62 is in the form of the encrypted data, after decrypting the data with the encrypting/decrypting unit 92, the operating unit 64 supplies the data (the command) to the sequencer 91 for processing of the data. It is noted that for a period between the transmission of the data to the IC card 2 and the reception of the response to the transmitted data, the card reader/writer 1 stands ready as it is after having transmitted the data assigned a value of 1. Thus, in the above period, the IC card 2 receives the modulated wave having the fixed maximum amplitude.

After a completion of the processing, the sequencer 91 outputs, to the BPSK modulation circuit 68, the data to be transmitted to the card reader/writer 1. Like the SPU 32 at the card reader/writer 1-side, after BPSK-modulating the supplied data, the BPSK modulation circuit 68 outputs the data to the ASK modulating unit 84 of the RF interface unit 61.

The ASK modulating unit 84 may apply the switching element to fluctuate loads connected to the opposite ends of the antenna 53. Specifically, the load variation caused depending on the data from the BPSK modulation circuit 68 is adapted to ASK-modulate the received modulated wave depending on the data to be transmitted, thereby causing the terminal voltage of the antenna 27 of the card reader/writer 1 to be fluctuated before the transmission of the data to the card reader/writer 1.

On the other hand, the modulation circuit 23 at the card reader/writer 1-side keeps up the transmission of the data assigned the value of 1 (the high level) at the time of the reception of the data from the IC card 2. Then, in the demodulation circuit 25, the data having been transmitted from the IC card 2 is detected based on a minute fluctuation (several ten micro-volts, for instance) of the terminal voltage of the antenna 27 electromagnetic-coupled with the antenna 53 of the IC card 2.

Further, the demodulation circuit 25 permits the detected signal (the ASK-modulated wave) to be modulated after being amplified with a high gain amplifier, and outputs the resultant digital data to the SPU 32. The SPU 32 demodulates the received digital data (the BPSK-modulated signal), and outputs the data to the DPU 31. The DPU 31 processes the data from the SPU 32, and judges depending on the result of processing whether or not the communication is to be terminated.

Then, in a case where it is determined that the communication is to be performed again, the communication between the card reader/writer 1 and the IC card 2 is effected in the same manner as the above case. Conversely, in a case where it is determined that the communication is to be terminated, the card reader/writer 1 terminates the processing for the communication with the IC card 2.

As described above, the card reader/writer 1 transmits the data to the IC card 2 by making use of the ASK modulation with the modulating factor k of less than 1. Then, the IC card 2 receives the above data to perform the processing corresponding to the received data, and transmits the data corresponding to the result of the processing back to the card reader/writer 1.

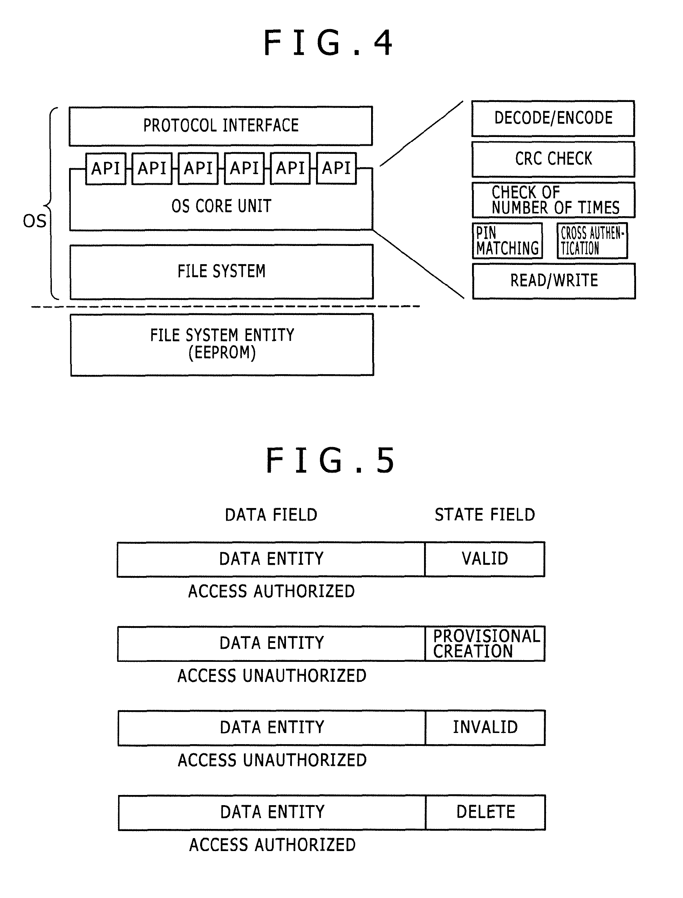

Referring to FIG. 4, there is schematically shown a configuration of a memory area control system in the IC card according to the embodiment of the present invention. As shown in FIG. 4, this control system is basically implemented as a subsystem contained in an operating system, and is composed of a protocol interface unit, an OS core unit, and a file system.

The protocol interface unit handles a request for external apparatus access to the file system through an external apparatus interface such as UART, or a request for card read/write apparatus access to the file system through the contactless IC card interface.

The OS core unit is adapted to perform the processing such as decoding/encoding of data exchanged with the file system, error correction with a CRC etc., checking of the number of rewrite times for each block of the EEPROM 66, PIN matching and mutual authentication etc.

Further, the OS core unit is equipped with some APIs (Application Programming Interfaces) to the file system for the processing such as the PIN matching and the mutual authentication both required at the time of file access and file read/write etc.

The file system provides physical access to the EEPROM 66 serving as a file system entity. An action itself of the physical access to a memory device such as the EEPROM is well known to those skilled in the concerned industry, so that description thereof is omitted here.

The memory area expanded on an EEPROM 43 is composed of one or more file systems. In an initial state, the memory area is managed by a single file system under control of an original IC card issuer. When a service source provider other than the IC card issuer attempts to divide a new file system from the memory area, a memory area division authorization and an authentication to the original IC card issuer are both required. Once divided, the authentication that is not to the original IC card issuer but to the service source provider of the file system itself is required for the access to the file system. To divide the file system is the same as to issue a virtual IC card.

The OS manages a division authorization key $K_d$ for giving an authorization to divide the memory area. Further, an issuer key $k_I$ for the issuer (the original IC card issuer or a provider having an experience in dividing the file), a system code and an area ID for file area identification are also under management for each file system.

The access to the file system is made through steps including an area ID request by polling and the mutual authentication. A file system issuer (the card issuer in the case of the original file system or the service source provider using the divided file system) may acquire the area ID available on the memory area of the concerned file system by, at first, effecting the polling to the file system with its appreciated system code as an argument. Next, the mutual authentication is followed using the acquired area ID and the issuer key $K_I$. Then, when the mutual authentication results in success, the access to the file system is permitted. The access to the file system requires encrypted communication involving use of the issuer key $K_I$ unique to the file system relevant to the issuer, resulting in no authorization to capture irrelevant data by the other file system, or to perform reading and writing with respect to the file system by those other than the issuer without permission.

Processing for the data transfer involving use of the contactless interface in the IC card is now described.

The data transfer specified herein includes not only the IC card-to-IC card transfer but also the transfer of data from the IC card to the IC chip-mounted apparatus (such as the mobile phone and the other types of mobile apparatuses) and the transfer of data from one IC chip-mounted apparatus to the other. For the sake of convenience, the IC card and the IC chip-mounted apparatus are hereinafter altogether referred to as the IC card. Further, the data serving as the transfer target is not limited to data in the whole memory area in the IC card and may be data in either expanded or divided file system units available on the memory area or file (or service) units of a file system lower than a specific one. For the sake of convenience, it is simply referred to as "data".

Unlike a radio LAN providing a relatively wide range of radio waves or a wired interface, in the contactless interface in the IC card, a connection state is maintained with the interfaces spaced at a relatively short distance, so that there are cases where some unexpected accidents cause the contactless interface to be pulled apart, resulting in the cut of the connection, or alternatively, the contactless communication results in no normal termination by other causes.

As one adverse effect of an abnormal termination of the data transfer, there is one problem of causing the data to be overlapped such that the data will remain in both of the data transfer source and the data transfer destination.

The IC card (or the IC chip-mounted apparatus) is used as the place of safety to store the value information such as the electronic money and the electronic ticket, that is, the highly realizable digital data that is valuable as much as the cash. If overlapping of the data occurs, the value information provider is obliged to provide the service beyond one's actually issued service or the overlapped service, resulting in the detriment to the value information provider.

To the contrary, the contactless data communication according to the embodiment of the present invention is adaptable to completely prevent the data in the process of being transferred from being overlapped even when a processing break occurs in any stage in the course of the data transfer, as described in the following.

The embodiment of the present invention requires that the data (that is, the data serving as the transfer target) stored in the IC card is composed of a data field to write actual data and a state field to record a state of the data contained in the data field, as shown in FIG. 5.

Four types of states, "valid", "provisional creation", "invalid" and "delete", are defined as data field states for the period of the data transfer between the IC cards. Then, a current state of the data field needs to be written in the state field.

The valid state means a state in which the data field of the IC card is validly available. Thus, the operating system of the IC card may provide access, through prescribed authentication processing, to a request for external access to the data field containing a description to the effect of valid in the data field or to the file system.

The provisional creation state means a state in which in the course of the data transfer between the IC cards, creation of a valid data field serving as the transfer target in the memory area of the IC card serving as the transfer destination is in process. Although the data field in the provisional creation state is available with the valid data entity contained, no validity exists as the state of the concerned field. Thus, the operating system of the IC card denies the request for access to the data field containing the description to the effect of provisional creation in the state field or to the file system.

The invalid state means a state in which in the course of the data transfer between the IC cards, the original data left behind in the memory area of the IC card as the transfer source is invalid or ought not to be used any more, because of a completion of the generation of the provisional creation data field serving as the transfer target in the memory area of the IC card serving as the transfer destination. Although the data field in the provisional creation state is available with the valid data entity contained, no validity exists as the state of the concerned field. Thus, the operating system of the IC card denies the request for access to the data field containing the description to the effect of invalid in the state field or to the file system.

The delete state means a state in which in the course of the data transfer between the IC cards, the original data contained in the memory area of the IC card as the transfer source does not need to be preserved any more, after the provisional creation data field serving as the transfer target in the memory area of the IC card serving as the transfer destination has been validated. It is at the option to completely delete the data field placed into the delete state or give only the description indicating the delete state. The data field in the delete state is reusable for rewriting etc. after erasing. Thus, the operating system of the IC card takes an action of access to the data field through the predetermined authentication processing whenever external write access occurs.

It is noted that each of the data fields in the provisional creation and the invalid states, although ensuring that the contained data entity itself is valid, is in the state where ordinary access through the contactless interface is prohibited. The termination in the data provisional creation state causes the data to be placed into the invalid state in the IC card as the transfer source, and also into the provisional creation state in the IC card as the transfer destination as described later, in which case, use of the data with either the card becomes unauthorized, resulting in creation of the same state as a data lost state. In such a case, it is also allowable to provide a service for recovery of the data field from the invalid or provisional creation state to the valid state through operations by a card administrator.

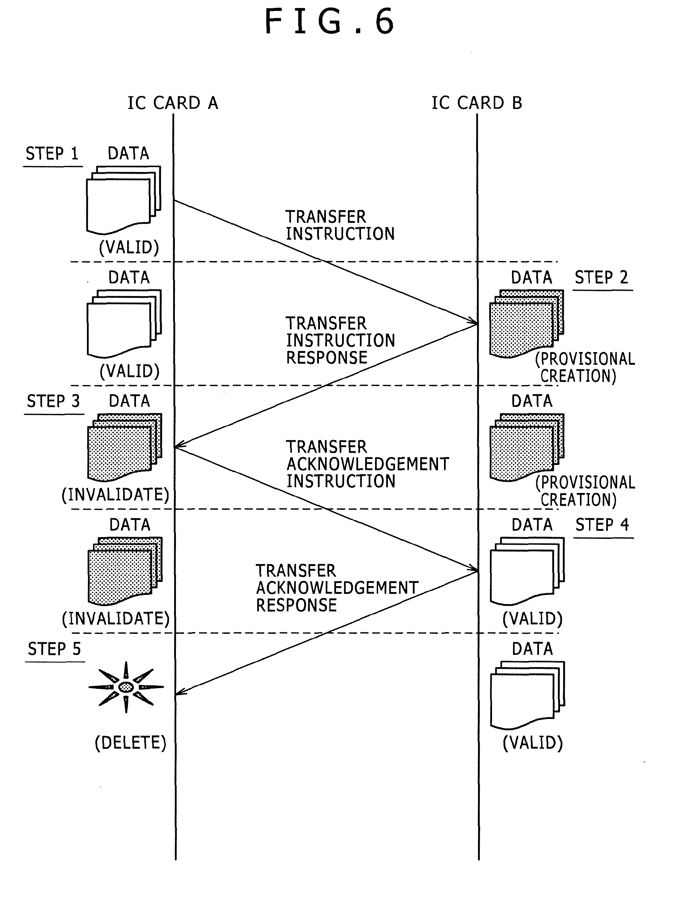

An operation procedure for the data transfer from one IC card to the other IC card using the contactless interfaces in the IC cards is now described with reference to FIG. 6. Provided that in FIG. 6, with a data transfer source apparatus specified as an IC card A, a data transfer destination apparatus is specified as an IC card B. Further, with an encrypted data transmission line established between the IC cards A and B with the contactless interfaces through a prescribed authentication procedure, each communication step shown in the following requires that the communication is effected using this transmission line.

Step 1)

A data transfer instruction is transmitted from the IC card A to the IC card B. A data transfer instruction message frame is formed of a combination of a transfer instruction command and a data entity serving as the transfer target.

Step 2)

The IC card B, when receiving a transfer instruction message, effects provisional creation of the data. Specifically, after writing of the data entity contained in the message onto its memory area, the state of the data field is placed into "provisional creation". Further, an IC card A's ID contained in the transfer instruction is assigned to the provisional creation data.

At this stage, the data entity serving as the transfer target is present in both of the IC cards A and B. Although the data field in the provisional creation state is available with the valid data entity contained, no validity exists as the state of the concerned field. Thus, the operating system of the IC card B rejects the request for access to the data field containing the description to the effect of provisional creation in the state field or to the file system. In other words, the data is substantially prevented from being overlapped.

Then, the IC card B transmits, back to the IC card A, a transfer instruction response message describing an acknowledgement of the transfer instruction involved in the step 1).

Step 3)

The IC card A receives the transfer instruction response message from the IC card B, causing the state of the transmitted data field in the step 1) to be invalid. An IC card B's ID contained in the transfer instruction response is assigned to the invalidated data data field.

At this stage, the data entity serving as the transfer target is present in both of the IC cards A and B. Although the valid data entity is described in the data field in the invalid state, no validity exists as the state of the concerned field. Thus, the operating system of the IC card A rejects the request for access to the data field containing the description to the effect of invalid in the state field or to the file system. In other words, the data is substantially prevented from being overlapped.

Then, the IC card A transmits, back to the IC card B, a transfer acknowledgement instruction message serving as an acknowledgement to the transfer instruction response involved in the Step 2).

Step 4)

After the reception of the response or the transfer acknowledgement message involved in the step 3), the IC card B transforms the provisional creation data into actual data. Specifically, the state of the data field containing the received data in the step 2) is updated so as to change from "provisional creation" to "valid".

The valid state means the state in which the data field of the IC card is authorized to be validly available. Thus, the operating system of the IC card B may provide access, through the prescribed authentication processing, to the request for external access to the data field containing the description to the effect of valid in the state field or to the file system.

Further, while at this stage, the data entity serving as the transfer target is present in both of the IC cards A and B, the IC card A-side is available with the data field placed into the invalid state, so that the data is substantially prevented from being overlapped.

Further, the IC card B transmits, back to the IC card A, a transfer acknowledgement response message serving as the response to the transfer acknowledgement instruction.

Step 5)

The IC card A, when receiving the transfer acknowledgement response message, deletes the data from the invalidated data field. The data field in the delete state means that it is in the state where in the course of the data transfer between the IC cards, the original data contained in the memory area of the IC card as the transfer source does not need to be preserved any more, after the provisional creation data field serving as the transfer target in the memory area of the IC card serving as the transfer destination has been validated. It is at the option to completely delete the data field placed into the delete state or to give only the description to the effect of the existence of the delete state.

At a stage of completion of the above data transfer process, the data entity serving as the transfer target is found only in the IC card B, permitting the data to be provided without being overlapped.

It is desired to fully understand that use of the above steps 1) to 5) makes it possible to eliminate the presence of the overlapped data. However, a situation exists that the data is invalidated, so that it is necessary for this case to take means that allows the data issuer to check the situation and restore the data.

It is noted that while the encrypted data transmission line preferably needs to be established between the IC cards A and B with the contactless interfaces in order to suitably implement the present invention, no limitation is particularly imposed on a form of the encrypted data transmission line.

For instance, Japanese Patent Application Publication (KOKAI) 2002-24778 having been already assigned to the present applicant provides a disclosure on a data communication method in which with a reader/writer held in close contact together with the same type of IC cards, coupling with integrated antennas of the same type of IC cards through a reader/writer antenna is adapted to directly exchange the data between the same type of IC cards, permitting copy of records to be effected between built-in memories of the same type of IC cards. Accordingly, it is also allowable to apply the above data communication method to transfer the data between the IC cards A and B.

[Industrial Applicability]

The present invention has been heretofore described in detail with reference to the specific embodiment. However, it is obvious to those skilled in the art that various modifications and substitutions of the above embodiment may be made without departing from the scope of the present invention.

While the present specification has described in relation to the configuration of the present invention together with its operations and effects, mainly to the embodiment available for the application of the present invention to the data communication system involving use of the encrypted data transmission line established with the contactless interfaces used in the IC cards, the scope of the present invention is not limited to the above. In other words, the present invention, even when applied to cases involving use of any type of communication interface, is adaptable to suitably prevent the data from being overlapped between the data transfer source apparatus and the data transfer destination apparatus in the process of the data transfer.

In conclusion, the disclosure of the present invention has been given in the form of illustrations, and the contents of the present specification are therefore illustrative and not restrictive. The scope of the present invention is to be determined in considerations of the description of claims.

**Claims**

1. A data communication system for transferring data between data communication apparatuses having memories adapted to store data, **characterized by** having:

   communication means which transfers the data stored in a memory of a first data communication apparatus serving as a data transfer source to a memory of a second data communication apparatus serving as a data transfer destination; state setting means which respectively sets, in a stage in the course of data transfer processing with said communication means, states in a memory of each of said first and said second communication apparatuses in relation to a data entity serving as a transfer target; and memory access control means which brings, into unauthorized, access to said data entity in the memory of at least one data communication apparatus, in a case where a state representing a presence of the data entity serving as the transfer target in the memory of each of said first and said second communication apparatuses is set.

2. The data communication system according to claim 1, **characterized in that**:

   said communication means effects transfer of the data between the memories of said first and said second communication apparatus through data communication involving use of an encrypted data transmission line established with contactless interfaces.

3. The data communication system according to claim 1, **characterized in that**:

   said state setting means places a data field adapted to hold the data entity in the memory of each of said first and said second data communication apparatuses into one of states including a valid state in which access to the data contained in the data field is authorized, a state in which provisional creation of the data contained in the data field is in process, a state in which the data contained in the data field is invalid, and a state in which the data is deleted from the data field, and said memory access control means prohibits the access to the data field placed into the provisional and invalid states in the memory of each of said first and said second data communication apparatuses.

4. The data communication system according to claim 3, **characterized in that**:

   in response to that a data transfer instruction was issued from said first data communication apparatus, said state setting means places, into the provisional creation state, the held data entity as the transfer target in the memory of said second data communication apparatus.

5. The data communication system according to claim 4, **characterized in that**:

   in response to that a transfer instruction response to said data transfer instruction was transmitted from said second data communication apparatus, said state setting means places, into the invalid state, the held data entity in the memory of said first data communication apparatus.

6. The data communication system according to claim 5, **characterized in that**:

   in response to that said first data communication apparatus transmitted a transfer acknowledgement instruction describing that the data entity serving as the transfer target was placed into the invalid state, said state setting means places, into the valid state, the held data entity in the provisional creation state in the memory of said second data communication apparatus.

7. The data communication system according to claim 6, **characterized in that**:

   in response to that said second data communication apparatus transmitted a transfer acknowledgement response describing that the held data entity in the memory was placed into the valid state, said state setting means deletes the held data entity in the invalid state from the memory of said first data communication apparatus.

8. A data communication method of transferring data between data communication apparatuses having memories adapted to store data, **characterized by** having:

   a step in which, in response to a data transfer instruction from a first data communication apparatus serving as a data transfer source, a second data communication apparatus serving as a data transfer destination places data serving as a transfer target into a provisional creation state, before holding said data in its memory;

a step in which said first data communication apparatus receives a transfer instruction response to the data transfer instruction from said second data communication apparatus and places the held data in its memory into an invalid state;

a step in which said first data communication apparatus transmits a transfer acknowledgement instruction describing that the data serving as the transfer target was placed into the invalid state;

a step in which, in response to said transfer acknowledgement instruction, said second data communication apparatus validates the held data in the provisional creation state in its memory;

a step in which said second data communication apparatus transmits a transfer acknowledgement response describing that the held data in its memory was placed into the valid state; and

a step in which, in response to said transfer acknowledgement response, said first data communication apparatus deletes the held data in the invalid state from its memory; and **characterized in that**:

> access to the data field placed into the provisional creation or invalid state in the memory of each of said data communication apparatuses is prohibited.

9. A data communication apparatus for transferring data, **characterized by** having:

> data communication means which effects communication of data;
> communication control means which controls a data communication operation;
> data holding means which holds the data; and
> data management means which manages the data contained in said data holding means, and

**characterized in that**:

> said data management means places a data field adapted to hold the data into one of states including a valid state in which access to the data contained in the data field is authorized, a state in which provisional creation of the data contained in the data field is in process, a state in which the data contained in the data field is invalid, and a state in which the data is deleted from the data field, causing the access to the data field in the provisional creation and invalid states to be prohibited.

10. The data communication apparatus according to claim 9, **characterized in that**:

said data communication means effects data communication involving use of an encrypted data communication line established with contactless interfaces.

11. The data communication apparatus according to claim 9, **characterized in that**:

> in a case of operating as a data transfer source apparatus,
> said communication control means issues a transfer instruction to a data transfer destination apparatus, and also a transfer acknowledgement instruction to a transfer instruction response from the data transfer destination apparatus, and
> said data management means, when receiving the transfer instruction response, invalidates the data serving as the transfer target, and when receiving a transfer acknowledgement response to the transfer acknowledgement instruction, deletes the invalidated data.

12. The data communication apparatus according to claim 9, **characterized in that**:

> in a case of operating as the data transfer destination apparatus,
> said communication control means transmits a transfer instruction response in response to the transfer instruction from the data transfer source apparatus, and also a transfer acknowledgement response in response to the transfer acknowledgement instruction, and
> said data management means effects provisional creation of the data serving as the transfer target after being received together with the transfer instruction, and validates the provisional created data in response to the transfer acknowledgement instruction.

# FIG.1

IC CARD `2` ←—RF—→ CARD READER/ WRITER `1` ←—RS-485A—→ CONTROLLER `3`

# FIG.2

IC21

DPU `31` ⟷ ⟷ SCC `33` ←→ CONTROLLER 3

DEMODU-LATION CIRCUIT `25`

SPU `32` ⟷ MEMORY UNIT `34`
RAM `42`  ROM `41`

`27`

MODU-LATION CIRCUIT `23` ← OSCILLA-TOR (13.56MHz) `26`

FLASH MEMORY `22`

EP 1 744 250 A1

# FIG.3

IC51

**61**

VOLTAGE REGULATOR — 82

ASK DEMODULATING UNIT — 81

OSCILLATION CIRCUIT — 83

ASK DEMODULATING UNIT — 84

BPSK DEMODULATION CIRCUIT — 62

PLL UNIT — 63

BPSK MODULATION CIRCUIT — 68

**64**

ENCRYPTING/ DECRYPTING UNIT
92

SEQUENCER — 91

PARITY OPERATING UNIT — 93

ROM — 65

EEPROM — 66

RAM — 67

53

52

# F I G . 4

| PROTOCOL INTERFACE |
|---|

| API | API | API | API | API | API |

OS CORE UNIT

OS

| FILE SYSTEM |
|---|

| FILE SYSTEM ENTITY (EEPROM) |
|---|

| DECODE/ENCODE |
|---|
| CRC CHECK |
| CHECK OF NUMBER OF TIMES |

| PIN MATCHING | CROSS AUTHEN-TICATION |
|---|---|

| READ/WRITE |
|---|

# F I G . 5

| DATA FIELD | STATE FIELD |
|---|---|

| DATA ENTITY | VALID |
|---|---|

ACCESS AUTHORIZED

| DATA ENTITY | PROVISIONAL CREATION |
|---|---|

ACCESS UNAUTHORIZED

| DATA ENTITY | INVALID |
|---|---|

ACCESS UNAUTHORIZED

| DATA ENTITY | DELETE |
|---|---|

ACCESS AUTHORIZED

# FIG.6

IC CARD A                    IC CARD B

STEP 1    DATA
                                            DATA    STEP 2

          TRANSFER
          INSTRUCTION

(VALID)

          DATA
                                            DATA    STEP 2

          TRANSFER
          INSTRUCTION
          RESPONSE

(VALID)                                     (PROVISIONAL
                                             CREATION)

STEP 3    DATA                              DATA

          TRANSFER
          ACKNOWLEDGEMENT
          INSTRUCTION

(INVALIDATE)                                (PROVISIONAL
                                             CREATION)

          DATA                              DATA    STEP 4

          TRANSFER
          ACKNOWLEDGEMENT
          RESPONSE

(INVALIDATE)                                (VALID)

STEP 5                                      DATA

(DELETE)                                    (VALID)

| INTERNATIONAL SEARCH REPORT | International application No. |
|---|---|
| | PCT/JP2005/007380 |

A. CLASSIFICATION OF SUBJECT MATTER
Int.Cl⁷ G06F13/10, G06F12/14, G06K17/00, G06K19/00

According to International Patent Classification (IPC) or to both national classification and IPC

B. FIELDS SEARCHED

Minimum documentation searched (classification system followed by classification symbols)
Int.Cl⁷ G06F13/10, G06F12/14, G06K17/00, G06K19/00

Documentation searched other than minimum documentation to the extent that such documents are included in the fields searched
Jitsuyo Shinan Koho              1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-505348 A (Mondex International Ltd.), 18 May, 1999 (18.05.99), page 4, line 13 to page 7, line 3 | 1-12 |
| A | JP 2003-296487 A (Matsushita Electric Industrial Co., Ltd.), 17 October, 2003 (17.10.03), Par. Nos. [0086] to [0091], [0208] | 1-12 |
| A | JP 2000-331239 A (Oki Electric Industry Co., Ltd.), 30 November, 2000 (30.11.00), Par. Nos. [0003], [0019] | 1-12 |

☒ Further documents are listed in the continuation of Box C.    ☒ See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 07 July, 2005 (07.07.05) | 26 July, 2005 (26.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

EP 1 744 250 A1

**INTERNATIONAL SEARCH REPORT**

| | International application No. |
|---|---|
| | PCT/JP2005/007380 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-027225 A  (NTT Data Communications Systems Corp.), 27 January, 1998 (27.01.98), Par. No. [0009] | 1-12 |
| A | JP 2000-322535 A  (NTT Data Corp.), 24 November, 2000 (24.11.00), Par. Nos. [0005], [0009] | 1-12 |

Form PCT/ISA/210 (continuation of second sheet) (January 2004)

19

INTERNATIONAL SEARCH REPORT
Information on patent family members

| International application No. |
| --- |
| PCT/JP2005/007380 |

| | | |
| --- | --- | --- |
| JP 11-505348 A | 1999.05.18 | US 5982293 A1<br>GB 9509762 A<br>GB 9509763 A<br>GB 9509766 A<br>EP 0829070 A<br>WO 1996/036947 A1<br>DE 69616784 T |
| JP 2003-296487 A | 2003.10.17 | US 2003-149671 A1<br>EP 01470466 A<br>WO 2003/065182 A1 |
| JP 2000-331239 A | 2000.11.30 | (Family: none) |
| JP 10-027225 A | 1998.01.27 | (Family: none) |
| JP 2000-322535 A | 2000.11.24 | (Family: none) |

Form PCT/ISA/210 (patent family annex) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003141434 A

- JP 2002024778 A

**Non-patent literature cited in the description**

- **KLAUS FINKENZELLER.** RFID handbook, Principles and Applications of Contactless IC Card. Nikkan Kogyou Shimbun Ltd,